Europäisches Patentamt

European Patent Office

Office européen des brevets

(11) Veröffentlichungsnummer: **0 309 891**

**A2**

## (12) EUROPÄISCHE PATENTANMELDUNG

(21) Anmeldenummer: 88115516.2

(22) Anmeldetag: 22.09.88

(51) Int. Cl.⁴: **H04N 9/64**

(30) Priorität: 30.09.87 DE 3733475

(43) Veröffentlichungstag der Anmeldung:
05.04.89 Patentblatt 89/14

(84) Benannte Vertragsstaaten:
**AT BE CH DE ES FR GB GR IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Geiger, Erich**
**Panoramaweg 19**
**D-7730 VS-Unterkirnach(DE)**
Erfinder: **Cerda-Davo, Silvestre**
**Ronda de Buenavista 20-P4-4C**
**E-45005 Toledo(ES)**

(74) Vertreter: **Körner, Peter, Dipl.-Ing.**
**Deutsche Thomson-Brandt GmbH Patent-**
**und Lizenzabteilung Göttinger Chaussee 76**
**D-3000 Hannover 91(DE)**

(54) **Empfangsgerät für Farbfernsehsignale.**

(57)     2.1 Handelsübliche Farbfernsehgeräte sind mit einer Norm-Buchse für die Ein- und Ausgabe von FBAS- und RGB - Signalen ausgerüstet.
Es ist vorgeschlagen worden, für die Ein- und Ausgabe von getrennten Luminanz- und Chrominanzsignalen, auch Y/C-Signale genannt, den FBAS - Kontakt für das Luminanzsignal und einen der RGB - Kontakte für das Chrominanzsignal auszunutzen.

2.2 Durch eine Burst-Erkennungsschaltung im Gerät wird festgestellt, ob ein FBAS- oder ein Y/C-Signal eingespeist wird. Eine Schaltspannung, die von der Burst-Erkennungsschaltung abgegeben wird, steuert einen elektronischen Schalter, durch den automatisch eine Umschaltung zwischen dem mit den Kontakt zu verbindenden FBAS- oder Y/C- Signalweg bewirkt wird.

2.3 Empfangsgerät für Farbfernsehsignale mit Norm-Buchse.

EP 0 309 891 A2

## Empfangsgerät für Farbfernsehsignale

Handelsübliche Farbfernsehempfangsgeräte sind mit einer mehr-poligen Anschlußbuchse, insbesondere mit einer nach DIN EN 50049 ausgeführten Peritelevision Verbindung, auch SCART-Buchse genannt, ausgerüstet, die separate Kontakte sowohl für ein FBAS-Signal als auch für die den Grundfarben rot (R) grün (G) blau (B) zugeordneten Signale nebst Kontakten für Synchronsignale und Steuersignale aufweist. Eine derartige Buchse ist, bedingt durch die Norm, nicht für die Einspeisung von getrennten Luminanz- und Chrominanzsignalen (Y C) ausgelegt. Um auch diese Signale ein- oder auch ausgeben zu können, ist vorgeschlagen worden, dem für das FBAS Signal vorgesehenen Kontakt das Luminanzsignal, und einem der den Grundfarben zugeordneten Kontakte, z.B. dem für das R-Signal, das Chrominanzsignal zuzuordnen.

Damit im Empfänger je nach zugeführter Information, FBAS oder Y C, die richtige Zuordnung in den unterschiedlichen Signalverarbeitungswegen erfolgen kann, ist es erforderlich, durch Bedienung eines Schalters diese Zuordnung zu treffen.

Es ist Aufgabe der Erfindung, diese Zuordnung unabhängig von einer bedienenden Person automatisch zu bewirken.

Diese Aufgabe wird gemäß der Erfindung durch die im Anspruch 1 aufgeführten Merkmale gelöst. Weiterbildungen der Erfindung sind in den Unteransprüchen gekennzeichnet.

Im Prinzip erfolgt die automatische Anschaltung der an den Kontakten anstehenden Signale an die zugeordneten Signalwege über einen Schalter, dessen Schaltstellung von einem in ei ner Burst-Signal-Erkennungsschaltung erzeugten Steuersignal abgeleitet wird.

Wird durch die Erkennungsschaltung kein Burstsignal eines anliegenden Fersehsignales detektiert, wird der Schalter in Stellung Y C-Signalweg geschaltet, da in diesem Fall entweder ein Schwarz-weiß-Signal oder ein Y C-Signal vorliegt. Bei Erkennung eines Burstsignales wird dagegen der Schalter in Stellung FBAS-Signalweg geschaltet.

Die Bursterkennung kann durch die in einem Farbfernsehgerät bereits vorhandene "Farbkillerschaltung" erfolgen, oder auch durch eine direkt mit dem Kontakt für das FBAS-Signal verbundene, gesonderte Erkennungsschaltung.

Im folgenden soll die Erfindung anhand eines Schaltungsbeispieles in einer Figur näher erläutert werden.

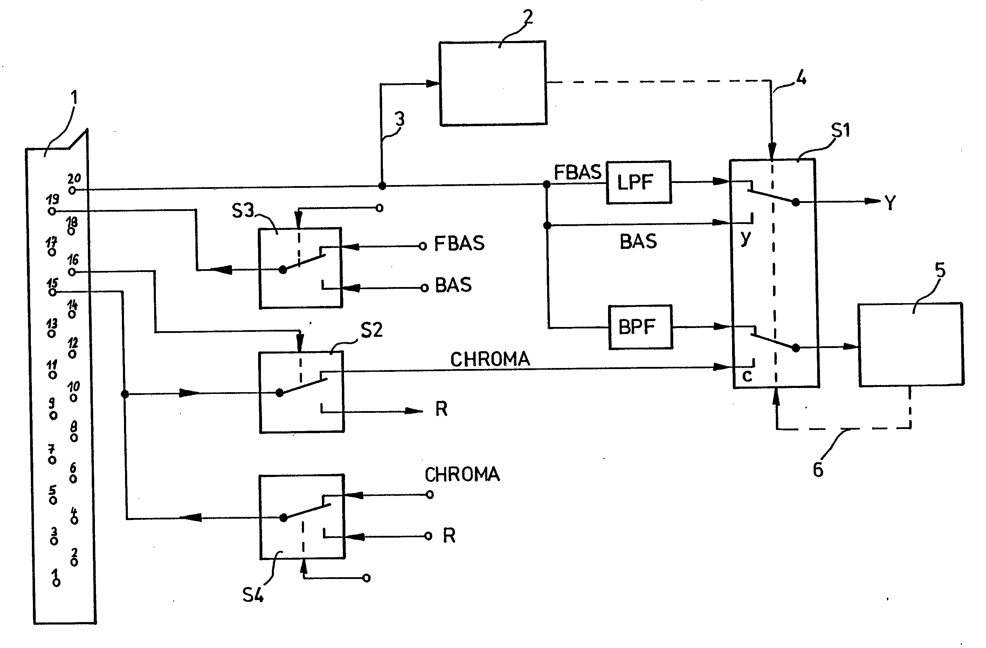

Die Figur zeigt eine SCART-Buchse 1, an deren Eingangskontakt 20 entweder ein FBAS-Signal oder ein Y-Signal, auch BAS-Signal genannt, anliegen kann. Direkt mit Kontakt 20 ist eine Burst-Erkennungsschaltung 2 über Leitung 3 angeschlossen. Von der Burst-Erkennungsschaltung 2 wird eine Schaltspannung auf Leitung 4 ausgegeben, von der ein elektronischer Schalter S1 betätigt wird. Wird auf Leitung 3 ein Burst erkannt, also ein FBAS-Signal eingespeist, wird über Leitung 4 der Schalter S1 in die gezeichnete Schalterstellung gesteuert, und das FBAS-Signal wird über ein Lowpass-Filter weitergeleitet. Bei Fehlen eines Burstes auf Leitung 3 schaltet Schalter S1 das nun anstehende Y- oder auch BAS-Signal an den zugehörigen BAS-Verstärkungsweg, und ein an Kontakt 15 anstehendes Chroma-Signal an den Chromaprozessor 5 weiter.

Die Bursterkennungsschaltung kann auch die im Gerät bereits vorhandene "Farbkillerschaltung" im Chromaprozessor 5 sein, von der ein entsprechendes Schaltsignal zur Steuerung des Schalters S1 über die gestrichelt gezeichnete Leitung 6 abgegeben wird.

Die Umschaltung der Signalwege für das an Kontakt 15 anstehende R- oder C-Signal wird durch den elektronischen Schalter S2 bewirkt, welcher von einer an Kontakt 16 anstehenden Spannung gesteuert wird. Liegt ein R-Signal an, ist die Spannung an Kontakt 16 nach Norm "Logisch 1" und das R-signal wird an den R-Verstärkungszug angelegt. Ist die Spannung an Kontakt 16 "Logisch 0", wird der Chroma-Verstärkungszug mit Kontakt 15 verbunden.

Im Umkehrfall, d.h. für die Ausgabe von Signalen an den FBAS-Kontakt 19 von SCART-Buchse 1, muß durch Vorwahl mittels Schalter S3 festgelegt werden, ob ein FBAS- oder ein Y/C-Signal, d.h. ein BAS-Signal an Kontakt 19 ausgegeben werden soll. Bei Ausgabe von Y/C- Signalen wird das Chroma-Signal an Kontakt 15 gelegt, wobei die Verbindung zu dem R-bzw. zu dem Chroma- Eingangsverstärker mittels Schalter S4 unterbrochen wird.

## Ansprüche

1. Empfangsgerät für Farbfernsehsignale, mit einer Buchse für die Ein- und Ausgabe von FBAS-Signalen, bei der für die Ein- und Ausgabe getrennter Luminanz und Chrominanzsignale (Y/C-Signale) der FBAS- Kontakt auch für das Y-Signal verwendet wird, und mit einem im Empfangsgerät angeordneten Schalter für die Anschaltung zugeordneter Signalwege an den FBAS-Kontakt, sowie mit einer im Empfangsgerät angeordneten Burst-Erkennungsschaltung, **dadurch gekennzeichnet,** daß bei Fehlen eines Burstsignales durch die Burst-Erkennungsschaltung eine Schaltspannung für den Schalter abgegeben wird, die eine Anschaltung des Y-Signalweges an den FBAS-Kontakt bewirkt.

2. Empfangsgerät nach Anspruch 1, **dadurch gekennzeichnet,** daß die Burst-Erkennungsschaltung direkt mit dem Kontakt für das FBAS-Signal verbunden ist.

3. Empfangsgerät nach Anspruch 1, **dadurch gekennzeichnet,** daß die Schaltspannung von einer im Gerät vorhandenen "Farbkiller-Schaltung" abgeleitet wird.